# EUROPÄISCHE PATENTSCHRIFT

(11) **EP 1 901 982 B1**
(45) Veröffentlichungstag und Bekanntmachung des Hinweises auf die Patenterteilung: **17.09.2008**
(21) Anmeldenummer: 06762375.1
(22) Anmeldetag: 04.07.2006
(51) Int. Cl.: B65G 47/84, B65G 17/32, B65G 17/48

(54) **BEHALTER-BEHANDLUNGSMASCHINE**
CONTAINER TREATMENT MACHINE
MACHINE POUR LE TRAITEMENT DE RECIPIENTS

(30) Priorität: 09.07.2005 DE 102005032175
(43) Veröffentlichungstag der Anmeldung: 26.03.2008
(73) Patentinhaber: KRONES Aktiengesellschaft, 93073 Neutraubling (DE)
(72) Erfinder: HAUSLADEN, Wolfgang, 93099 Mötzing (DE)
(86) Internationale Anmeldenummer: PCT/EP2006/006481
(87) Internationale Veröffentlichungsnummer: WO 2007/006452

(56) Entgegenhaltungen:
- EP-A1- 1 454 852
- DE-A1- 2 853 215
- FR-A1- 2 795 350

## Beschreibung

Die Erfindung betrifft eine Behälter-Behandlungsmaschine gemäß Oberbegriff des Patentanspruchs 1 und ein Verfahren zum Beladen und Entladen einer Behälter-Behandlungsmaschine gemäß Oberbegriff des Anspruchs 15. Eine derartige Behälter-Behandlungmaschine und ein derartiger Verfahren sind aus der DE 28 53 215 A bekannt.

Die Behälter können Flaschen sein. Die Behältermaschine kann ein Rinser, ein Verschließer, ein Füller, ein Inspektor oder dgl. mit mitlaufenden Behandlungsorganen sein, oder eine Kombination mindestens zweier solcher Maschinen-Baugruppen umfassen.

Bei der aus DE 28 53 215 A bekannten Behälter-Behandlungsmaschine fördern die an dem als Förder-Gliederkette ausgebildeten Förderglied angebrachten Halteelement-Gruppen die Behälter in zwei parallelen Reihen entlang der Behandlungsstrecke, um trotz eines moderaten Durchmessers des Karussells die Kapazität in der Behandlungsstrecke zu erhöhen. Die Halteelemente sind topfförmige Aufnahmen, die zu beiden Seiten von der Oberseite der Förder-Gliederkette in fester Position vorstehen. Die Zu- und Abführsysteme umfassen jeweils zwei Zuführ- und Abführsterne, die die Halteelement-Gruppen aus zwei Behälterreihen beladen und in zwei Reihen entladen. Das Zu- und Abführen der Behälter in zwei Reihen bedeutet einen hohen baulichen Aufwand und erfordert unterschiedliche Sterngrößen in jedem Sternpaar sowie die Steuerung unterschiedlicher Sterngeschwindigkeiten und Behälterteilungen.

Der Erfindung liegt die Aufgabe zugrunde, eine Behälter-Behandlungsmaschine der eingangs genannten Art sowie ein Verfahren zum Beladen und Entladen der Behälter-Behandlungsmaschine anzugeben, mit denen die Vorteile der erhöhten Kapazität und des reduzierten Karussell-Durchmessers ohne den Nachteil aufwändiger Zu- und Abführsysteme zu nutzen ist.

Die gestellte Aufgabe wird mit einer Behälter-Behandlungsmaschine mit den Merkmalen des Patentanspruchs 1 und mit einem Verfahren mit den Merkmalen des Patentanspruchs 15 gelöst.

Da in der erfindungsgemäßen Behälter-Behandlungsmaschine die Halteelement-Gruppen zwischen den einreihigen und mehrreihigen Positionen bezüglich der Förderrichtung umstellbar sind, und mittels der Umstellvorrichtung zumindest zum Laden und Entladen aus der mehrreihigen Position vorübergehend in die einreihige Position umgestellt werden, können einfache einreihige Zu- und Abführsysteme mit jeweils nur einem Zuführ- und Abführstern bzw. einem einreihigen Linearförderer verwendet werden, obwohl bei reduziertem Karusselldurchmesser die Kapazität in der Behandlungsstrecke korrespondierend mit der Anzahl der Reihen erhöht ist. Dabei können die Behandlungsstrecken zwei- oder doppelreihig oder sogar mit noch mehr Reihen ausgelegt werden, wobei auch die mitlaufenden Behandlungsorgane in den Behandlungsstrecken in entsprechenden Reihen angeordnet sind.

Das erfindungsgemäße Verfahren ermöglicht bei reduziertem Karusselldurchmesser eine Erhöhung der Kapazität in der Behandlungsstrecke, wobei die Behälter einreihig mit einer entsprechenden Rate zugeführt und abgeführt werden.

Bei einer zweckmäßigen Ausführungsform wird gewinnbringend der Effekt eingesetzt, der sich bei Führung des Förderglieds entlang eines zu den Zu- und Abführsystemen konvexen Bogens mit vom Förderglied nach außen überstehenden Tragarmen erzielt wird. Entlang des Bogens werden nämlich die Tragarme in Förderrichtung voneinander zwangssepariert oder auseinander gespreizt, so dass sich zumindest im Bereich annähernd maximaler Zwangsseparation genügend Freiraum für die Haltelement-Gruppen bildet, um diese ohne Kollisionsgefahr zwischen benachbarten Gruppen oder den in diesen gehaltenen Behältern in der einreihigen Position zu fördern, so dass sie dann aus einer einzigen Behälterreihe beladen und auch wieder in eine einzige Behälterreihe entladen werden können. Zur Umstellung der Haltelement-Gruppen zwischen den Positionen werden nur die Schwenkträger relativ zu den Tragarmen verschwenkt. Diese Schwenkbewegung kann beispielsweise durch eine stationäre Führungskurve zwangsgesteuert werden. Alternativ ist es möglich, nur die Schwenkbewegung aus der mehrreihigen Position in die einreihige Position zwangszusteuern, und die Schwenkbewegung wieder in die mehrreihige Position selbsttätig beispielsweise mittels eines Kraftspeichers oder eines Servoantriebs zu bewerkstelligen. Bei einer weiteren Alternative wäre es möglich, beide Schwenkbewegungen durch Servoantriebe und/oder Kraftspeicher durchführen zu lassen. Pneumatische Federspeicher-Zylinder wären beispielsweise brauchbare Antriebselemente, oder auch Magnetantriebe oder dgl.

Bei einer zweckmäßigen Ausführungsform umfassen die Zu- und Abführsysteme einreihige Zu- und Abführsterne oder einreihige Linearförderer, und sind die Lade- und Entladezonen an zwischen einreihig und mehrreihig umstellbaren Umlenksternen für das Förderglied vorgesehen.

Im Falle einer stationären Haltelement-Positions-Umstellvorrichtung kann diese zweckmäßig bei einem Umlenkstern angeordnet sein, wobei sie sich im Wesentlichen nur durch die Lade- und Entladezone zu erstrecken braucht.

Bei einer anderen Ausführungsform der Behälter Behandlungsmaschine sind mindestens zwei einander zufördernde mehrreihige Behandlungsstrecken vorgesehen, beispielsweise eine in einem Rinser und die nachfolgende in einem Füller. Es könnten aber auch noch eine Behandlungsstrecke in einem Verschließer und/oder einem Inspektor dazugenommen werden, wobei die Behandlungsorgane in diesen Behandlungsstrecken jeweils mitlaufen.

Zweckmäßig wird zwischen einander zufördernden Behandlungsstrecken eine mehrreihige Transferstrecke vorgesehen, vorzugsweise mit zwei Umlenksternen. Obwohl die Zu- und Abfuhr nur einreihig erfolgt, lässt sich auch in der Transferstrecke die erhöhte Kapazität in den mehreren Reihen nutzen.

Bei einer weiteren Ausführungsvariante ist zwischen einer Behandlungsstrecke eines Rinsers und den Zu- und Abführsystemen jeweils eine Überkopf-Wendestrecke für die Halteelement-Gruppen vorgesehen, um die Behälter, beispielsweise Flaschen, im Rinser überkopf reinigen zu können, die Zu- und Abfuhr sowie die weiteren Behandlung hingegen mit in Normalposition befindlichen Behältern zu durchlaufen.

Zweckmäßig ist das Förderglied eine endlose Fördergliederkette, an der die Traghebel entweder an den Kettengliedern selbst oder an den Gelenken montiert sind.

Bei einer zweckmäßigen Ausführungsform sind die Haltelemente der Haltelementgruppe Greifer. Jeder Greifer definiert ein Maul zur formschlüssigen Aufnahme und Abgabe des Behälters. In der einreihigen Position der Greifer einer Halteelement-Gruppe weisen die Mäuler von--der Förderrichtung zur Seite, um das Beladen und Entladen aus einer einzigen Reihe oder in eine einzige Reihe problemlos zuzulassen, während in der mehrreihigen Position die Mäuler in oder gegen die Förderrichtung weisen.

Bei einer zweckmäßigen Ausführungsform werden die Halteelemente der Gruppe an einem gemeinsamen Schwenkträger angeordnet, der am Tragarm in einer Schwenklagerstelle schwenkbar gelagert ist. Um die Haltelemente selbsttätig in die mehrreihige Position zu bringen, kann, vorzugsweise, die mehrreihige Position durch einen Anschlag des Traghebels für den Schwenkträger definiert sein und der Schwenkträger durch Federkraft in Richtung zum Anschlag beaufschlagt werden. Somit nehmen die Halteelemente selbsttätig die mehrreihige Position ein, sobald sie aus der Lade- und Entladezone gefördert werden.

Zweckmäßig werden die Haltelemente in zumindest zwei zueinander parallelen Reihen gefördert, sobald sie ihre mehrreihige Position eingenommen haben. Es ist jedoch durchaus denkbar, auch mehr als zwei Reihen zu bilden.

Um den Aufspreizeffekt der Tragarme der Förderung entlang des Bogens optimal nutzen zu können, werden das Maß des Überstands des Tragarms nach außen, das Maß zwischen den Außenkonturen der Haltelemente der Gruppen und die konvexe Krümmung im Bogen derart aufeinander abgestimmt, dass bei maximaler Zwangsseparation keine Kollisionen zu befürchten sind und der zur Verfügung stehende Platz optimal ausgenutzt wird.

Der Radius in jeder Behandlungsstrecke im Karussell ist zweckmäßig größer als der Radius des Bogens. Dadurch stehen die Tragarme in der Behandlungsstrecke näher beieinander als im Bogen, wobei die Halteelement-Gruppen in den mehrreihigen Positionen sind, um eine optimal große Kapazität zu erzielen.

Verfahrensgemäß werden benachbarte Halteelement-Gruppen durch eine Führung des Förderglieds entlang eines Bogens an der Bogenaußenseite zwangssepariert und wird jede Halteelement-Gruppe bei zumindest im Wesentlichen maximaler Zwangsseparation in die einreihige Position umgestellt, um das Laden und Entladen aus bzw. in eine einzelne Reihe bequem zuzulassen und dennoch Kollisionen zwischen den Behältern oder den Haltelementen zu vermeiden.

Bei einer vorteilhaften Verfahrensvariante werden mit den einreihig beladenen und einreihig entladenen Halteelement-Gruppen innerhalb der Behandlungsstrecke zumindest zwei parallele Reihen gebildet, obwohl auch mehr als nur zwei Reihen möglich wären.

Schließlich ist es verfahrensdienlich, wenn jede Haltelement-Gruppe nur vor Erreichen der und bis durch die Lade- und Entladezone aus der mehrreihigen Position in die einreihige Position und danach wieder in die mehrreihige Position umgestellt wird. Dies ermöglicht die Verwendung einer einfachen Haltelement-Positions-Umstellvorrichtung, die nur in einem relativ kurzen Anteil der Förderstrecke einzuwirken braucht.

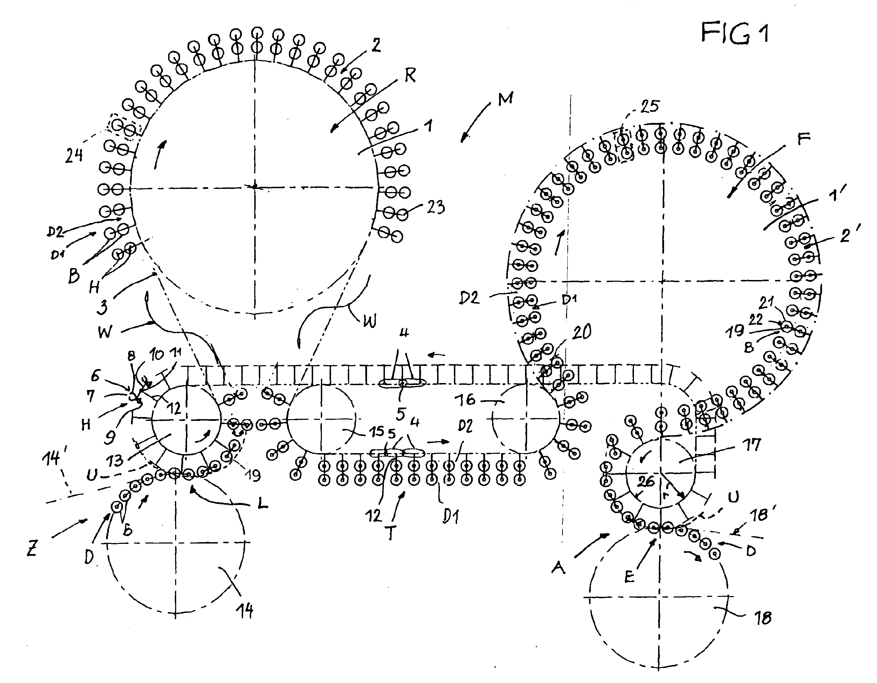

Die Erfindung wird anhand Fig. 1 erläutert, die eine Schemadraufsicht auf eine Behälter-Behandlungsmaschine zeigt. Die Behälter-Behandlungsmaschine ist beispielsweise mit zwei einander zufördernden Behandlungsstrecken dargestellt. Dies ist jedoch nur eine Auswahl aus einer Vielzahl von Möglichkeiten. So könnte auch nur eine einzige Behandlungsstrecke vorgesehen werden, oder könnten mehr als zwei Behandlungsstrecken hintereinander geschaltet sein.

Eine in Fig. 1 schematisch angedeutete Behälter-Behandlungsmaschine M dient zum Behandeln von Behälter B, beispielsweise Flaschen 22, bei der Getränkeabfüllung. Die Behälter-Behandlungsmaschine M umfasst einen Rinser R zum Reinigen der Behälter B, einen Füller F zum Füllen der gereinigten Behälter B, ein Zuführsystem Z und ein Abführsystem A, sowie ein Transfersystem T zwischen dem Rinser R und dem Füller F.

Der Rinser R wie auch der Füller F umfasst ein Karussell 1, 1', das drehantreibbar ist, und im Umfangsbereich jeweils eine Behandlungsstrecke 2, 2' definiert, entlang welcher die Behälter B in mehreren Reihen D1, D2, hier zwei zueinander parallelen Reihen, während der Behandlung gefördert werden. Die Behälter werden in Halteelementen H gehalten, die an einem endlosen Förderorgan 3, beispielsweise einer Förder-Gliederkette mit Gliedern 4 und Gelenken 5, angebracht sind.

Die Haltelemente H sind beispielsweise Greifer 6, deren jeder ein Maul 7 definiert, beispielsweise zwei schwenkbare Greifarme 8 aufweist, und durch einen Kraftspeicher 9, beispielsweise eine Feder, in Schließrichtung beaufschlagt ist. Die Greifarme 8 erfassen die Behälter B kraft- und formschlüssig.

Jeweils zwei Greifer 6 (entsprechend der beiden Reihen D1 D2 in den Behandlungsstrecken) sind an einem gemeinsamen Schwenkträger 10 angeordnet, der in einem Schwenklager 11 an einem Tragarm 12 schwenkbar gelagert ist.

Für den Fall, dass mehr als zwei Reihen D1, D2 gefahren werden, werden am Schwenkträger 10 entsprechend viele Greifer 6 (oder andere Haltelemente) montiert.

Jeder Tragarm 12 ist entweder an einem Kettenglied beispielsweise mittig oder im Bereich eines Gelenks 5 so festgelegt, dass er zu einer Seite des Förderglieds 3 und im Wesentlichen zur diesem senkrecht vorsteht. Die Mäuler 7 der Greifer 6 sind zumindest in etwa senkrecht zum Schwenkträger 10 orientiert.

Das Förderorgan 3 umschlingt einen Umlenkstern 13 und erstreckt sich von diesem durch eine Überkopf-Wendestrecke W für die Haltelemente H zur Behandlungsstrecke 2 des Rinsers. Ausgangs der Behandlungsstrecke 2 des Rinsers schließt sich eine weitere Überkopf-Wendestrecke W zu einem Umlenkstern 15 des Transfersystems T an, in welchem das Förderorgan 3 geradlinig zu einem weiteren Umlenkstern 16 und von diesem in die Behandlungsstrecke 2' des Füllers F einläuft. Ausgangs der Behandlungsstrecke 2' des Füllers F ist ein weiterer Umlenkstern 17 angeordnet, den das Förderglied umschlingt, und von dem das Förderglied 3 wieder zurück zum Umlenkstern 13 verläuft.

Das Zuführsystem Z ist dem Umlenkstern 13 zugeordnet und umfasst entweder einen Zuführstern 14 oder einen Linearzuführer 14'. Der Zuführstern 14 (der Linearförderer 14') liefert die Behälter B in einer einzelnen Reihe D an die Haltelemente H des Förderorgans, wobei bei der gezeigten Ausführungsform jeweils zwei Halteelemente H (zwei Greifer 6) eine Halteelement-Gruppe an einer Sektion des Förderorgans 3 bilden.

Das Abführsystem A umfasst ebenfalls entweder einen Abführstern 18 oder einen Linearförderer 18' in einreihiger (einzelne Reihe D) Auslegung.

Im Zuführsystem Z werden die Behälter B, beispielsweise Flaschen 22 mit einem Flaschenhals 19 und einem Flaschenkörper 21 so geliefert, dass der Flaschenhals 19 oben liegt. In der Überkopf-Wendestrecke W zwischen dem Umlenkstern 13 und dem Karussell 1 des Rinsers R werden die Behälter B mit den Halteelementen H um 180° gedreht, so dass im Falle von Flaschen 22 der Flaschenhals 19 nach unten weist, und ein Flaschenboden 23 nach oben weist. Im Karussell 1 des Rinsers R sind mitlaufende Behandlungsorgane 24, z. B. Spitzdüsen, vorgesehen, die die in den zwei Reihen D1, D2 geförderten Behälter behandeln, z.B. durch Spülen, Reinigen.

In der zweiten Überkopf-Wendestrecke W werden die Behälter B erneut um 180° gedreht, so dass sie im Falle von Flaschen 22 im Transfersystem T wieder mit nach oben weisenden Flaschenhälsen 19 gefördert werden.

Im Karussell 1' des Füllers F sind ebenfalls mitlaufende Behandlungsorgane 25, z.B. Füllköpfe mit Füllventilen, vorgesehen, die die zwei Reihen D1, D2 der Behälter B befüllen, während diese durch die Behandlungsstrecke 2' laufen. Vom Umlenkstern 17 werden die gefüllten Behälter B an das Abführsystem A übergeben und in diesem abgefördert, und zwar in einer einzelnen Reihe D.

Die Umlenksterne 13 bzw. 17 haben einen relativ kleinen Radius r, so dass ein zum Zuführ- bzw. Abführsystem Z, A konvexer Bogen im Förderglied 3 gebildet wird, zumindest in einer Ladezone L und einer Entladezone E zwischen dem Umkenkstern 13 und dem Zuführsystem Z und dem Umlenkstern 17 und dem Abführsystem A.

Durch den relativ kleinen Radius r der Umlenksterne 17, 13 werden innerhalb des Bogens 26 die Tragarme 12 relativ weit voneinander in Förderrichtung entfernt, so dass genügend Platz ist, jede Haltelement-Gruppe mit den Haltelementen H aus der mehrreihigen Position (zweireihig bei der gezeigten Ausführungsform), die jede Halteelement-Gruppe zumindest in den Behandlungsstrecken 2, 2' einnimmt, in eine einreihige Position umzustellen, die die Halteelement-Gruppe zumindest in der Ladezone L und der Entladezone E einnimmt. Dies wird durch Schwenken des Schwenkträgers 10 beispielsweise um 90° in der Schwenklagerstelle 11 am Tragarm 12 bewerkstelligt. Für die Umstellung ist zumindest im Bereich der Ladezone L und der Entladezone E jeweils eine Halteelement-Positions-Umstellvorrichtung U vorgesehen, die die Halteelemente vor und in der Ladezone L bzw. Entladezone E in der einreihigen Position hält, so dass die Behälter B, die vom Zuführsystem Z einreihig geliefert werden, bequem in die Halteelemente H eingebracht und von diesen mitgenommen werden, bzw. in der Entladezone E aus den Halteelementen H entnommen und in einer einzelnen Reihe abgeführt werden.

Zweckmäßig werden die Halteelemente H nur entlang der Umlenksterne 13, 17 und dort in die einreihige Position umgestellt, wo die Tragarme 12 maximal voneinander separiert sind.

Die Halteelement-Positions-Umstellvorrichtung U kann beispielsweise eine Führungsbahn sein, die an den Halteelementen oder an dort angeordneten Folgegliedern angreift und stationär so beispielsweise beim Umlenkstern 13, 17 montiert ist, dass die Halteelemente H zumindest in der Ladezone L oder der Entladezone E die einreihige Position einnehmen. Die Umstellvorrichtung U kann so ausgelegt sein, dass sie durch Zwangsverstellung die Halteelemente an jedem Tragarm auch wieder in die mehrreihige bzw. zweireihige Position umstellt, nachdem die Ladezone L bzw. Entlandezone E durchfahren worden ist. Alternativ wäre es möglich, den Schwenkträger 10 um die Schwenklagerstelle 11 durch Federkraft in Richtung zu der durch einen Anschlag 20 definierten mehrreihigen Position zu beaufschlagen, so dass die Halteelemente H nach Durchfahren der Ladezone L bzw. Entladezone E selbsttätig in die mehrreihige Position zurückkehren, nachdem sie zuvor gegen die Federkraft in die einreihige Position umgestellt waren. Als weitere Alternative (nicht gezeigt) könnte für jeden Schwenkträger 10 ein Servoantrieb (Federspeicherzylinder oder Magnetantrieb oder dgl.) am Tragarm 12 vorgesehen sein, der beispielsweise die Umstellung aus der zweireihigen Position in die einreihige Position gegen Federkraft (oder ohne Federkrafteinfluss) vornimmt, und, falls keine Federkraft einwirkt, auch wieder die Umstellung in die zweireihige Position durchführt. Gegebenenfalls sind die Schwenkträger 10 in der mehrreihigen Position gegenüber dem Tragarm 12 verriegelt, wobei sich diese Verriegelung bei der Umstellung in die einreihige Position vorübergehend lösen lässt.

Die Radien in den Karussells 1, 1' können deutlich größer sein als der Radius r in den Umlenksternen, 13, 17, damit die Behälter B in den Behandlungsstrecken 2, 2' möglichst dicht beieinanderliegend gefördert werden.

Der Radius r, die Überstandslänge des Tragarms 12, und das Außenmaß der Halteelemente einer Gruppe sind so aufeinander abgestimmt, dass in der Ladezone L bzw. der Entladezone E und in der einreihigen Position der Halteelement-Gruppe zwischen zwei benachbarten Behältern B ein eine Kollision vermeidender Zwischenabstand gebildet wird. Der Abstand zwischen benachbarten Behältern in den Halteelementen einer Gruppe ist zweckmäßigerweise gleich groß wie der Zwischenabstand zweier Behälter in benachbarten Gruppen, so dass der Zuführstern 14 und der Abführstern 18 Sterntaschen oder Greifer mit gleichem Abstand aufweisen können.

In der gezeigten Ausführungsform sind die Halteelemente in den beiden Reihen D1, D2 im Wesentlichen radial zur Drehachse des jeweiligen Karussells 1, 1' ausgerichtet. Alternativ wäre auch eine Ausrichtung abweichend von der Radialen denkbar. Ferner ist es möglich, die Umstellung aus der mehrreihigen Position in die einreihige Position exakt so zu steuern, dass jedes Halteelement bei Annäherung an einen vom Zuführsystem Z gelieferten Behälter bzw. am Umlenkstern 17 bei Annäherung an eine im Abführsystem A vorgesehene Halterung für einen Behälter nachdrücklich nach außen bewegt wird, um die Übernahme bzw. Übergabe ohne weitere Hilfsmittel durchzuführen.

Ferner sind bei der gezeigten Ausführungsform Greifer 6 angedeutet, die sich durch Eindrücken bzw. Herausziehen des Behälters öffnen und selbsttätig schließen, wobei das Maul 7 in der Ladezone L bzw. der Entnahmezone E jeweils nach außen weist. Alternativ könnten jedoch auch gesteuerte Greifer oder andere gesteuerte Halteelemente H vorgesehen sein.

Auf dem Förderweg vom Umlenkstern 17 durch die Transferstrecke T zurück zum Umlenkstern 13 wird das Förderorgan 3 mit den Halteelementen H zweckmäßig angehoben oder abgesenkt, um nicht mit den Behältern B zu kollidieren, die aus der Behandlungsstrecke 2 zum Umlenkstern 15 und vom Umlenkstern 16 zur Behandlungsstrecke 2' sowie aus der Behandlungsstrecke 2' zum Umlenkstern 17 gefördert werden.

## Patentansprüche

1. Behälter-Behandlungsmaschine (M), insbesondere mit einem Füller (F) und/oder Rinser (R) für Flaschen (22), mit wenigstens einem eine mehrreihige Behandlungsstrecke (2, 2') definierenden Karussell (1, 1'), mit mehrreihig mit dem Karussell laufenden Behandlungsorganen (24, 25), mit an Sektionen eines mitlaufenden Förderorgans (3) angebrachten Behälter-Halteelement-Gruppen, deren Halteelemente (H) zumindest innerhalb der Behandlungsstrecke (2, 2') quer zu Förderrichtung nebeneinanderliegend positioniert sind, und mit Zu- und Abführsystemen (Z, A), die zum Laden und Entladen der Halteelemente (H) in Lade- und Entladezonen (L, E) zu- und von der Behandlungsstrecke (2, 2') wegfördern, **dadurch gekennzeichnet, dass** die Zu- und Abführsysteme (Z, A) zur mehrreihigen Behandlungsstrecke (2, 2') einreihig (D) ausgebildet sind, dass jede Halteelement-Gruppe zwischen einer einreihigen Position, in der die Halteelementen (H) zumindest annähernd parallel zur Förderrichtung sind, und der quer zur Förderrichtung liegenden mehrreihigen Position umstellbar sind, und dass im Bereich der Lade- und Entladezonen (L, E) eine Halteelement-Positions-Umstellvorrichtung (U) vorgesehen ist.

2. Behälter-Behandlungsmaschine nach Anspruch 1, **dadurch gekennzeichnet, dass** das Förderorgan (3) in den Lade-und Entladezonen (L, E) einen zu den Zu- und Abführsystemen (Z, A) konvexen Bogen (26) bildet, dass die Halteelemente (H) der Gruppe an einer Sektion des Förderorgans (3) an einem Tragarm (12) angeordnet sind, der zumindest in der Lade- und Entladezone (L, E) von der Sektion zur Außenseite des konvexen Bogens (26) übersteht, und dass die Halteelemente (H) der Gruppe an dem Tragarm (12) zwischen der einreihigen Position und der mehrreihigen Position schwenkbar gelagert sind.

3. Behälter-Behandlungsmaschine nach Anspruch 2, **dadurch gekennzeichnet, dass** die Halteelement-Positions-Umstellvorrichtung (U) eine stationäre Zwangsführung in Förderrichtung hinter der Lade- und vor der Entladezone (L, E) und einen mitlaufenden Kraftspeicher oder einen Servoantrieb zum Umstellen der Halteelemente (H) aus der einreihigen Position in die mehrreihige Position umfasst.

4. Behälter-Behandlungsmaschine nach Anspruch 1, **dadurch gekennzeichnet, dass** die Zu- und Abführsysteme (Z, A) einreihige Zu- und Abführsterne (14, 18) oder einreihige Linearförderer (14', 18') aufweisen und die Lade- und Entladezonen (L, E) an zwischen einreihig und mehrreihig umstellbaren Umlenksternen (13, 17) für das Förderorgan (3) vorgesehen sind.

5. Behälter-Behandlungsmaschine nach Anspruch 4, **dadurch gekennzeichnet, dass** die Halteelement-Positions-Umstellvorrichtung (U) jeweils bei einem Umlenkstern (13, 17) angeordnet ist.

6. Behälter-Behandlungsmaschine nach Anspruch 1, **dadurch gekennzeichnet, dass** die Maschine (M) mindestens zwei einander zufördernde, mehrreihige Behandlungsstrecken (2, 2') aufweist, vorzugsweise einen Rinser (R) und einen dem Rinser (R) nachgeschalteten Füller (F).

7. Behälter-Behandlungsmaschine nach Anspruch 6, **dadurch gekennzeichnet, dass** zwischen den Behandlungsstrecken (2, 2') eine mehrreihige Transferstrecke (T) vorgesehen ist, vorzugsweise mit zwei weiteren Umlenksternen (15, 16).

8. Behälter-Behandlungsmaschine nach Anspruch 1, **dadurch gekennzeichnet, dass** in Förderrichtung vor und hinter einer Behandlungsstrecke (2), vorzugsweise eines Rinsers (R), jeweils eine Überkopf-Wendestrecke (W) für die in der mehrreihigen Position angeordneten Halteelemente (H) vorgesehen ist.

9. Behälter-Behandlungsmaschine nach Anspruch 2, **dadurch gekennzeichnet, dass** das Förderorgan (3) eine endlose Förder-Gliederkette ist, und dass die Tragarme (12) an Kettengliedern (4) oder an Gelenken (5) zwischen je zwei Kettengliedern (4) montiert sind.

10. Behälter-Behandlungsmaschine nach Anspruch 1, **dadurch gekennzeichnet, dass** die Halteelemente (H) Greifer (6) sind, und dass jeder Greifer (6) ein Maul (7) aufweist, das in der einreihigen Position vom Förderglied (3) nach außen und in der mehrreihigen Position in oder gegen die Förderrichtung weist.

11. Behälter-Behandlungsmaschine nach Anspruch 2, **dadurch gekennzeichnet, dass** die Halteelemente (H) einer Gruppe an einem gemeinsamen Schwenkträger (10) angeordnet sind, der am Tragarm (12) schwenkbar gelagert ist, und, vorzugsweise, durch Federkraft in Richtung zur mehrreihigen, durch einen Anschlag (20) am Tragarm (12) definierten Position beaufschlagt ist.

12. Behälter-Behandlungsmaschine nach wenigstens einem der vorhergehenden Ansprüche, **dadurch gekennzeichnet, dass** die mehreren Reihen mindestens zwei zueinander im Wesentlichen parallele Reihen (D1, D2) sind.

13. Behälter-Behandlungsmaschine nach Anspruch 2, **dadurch gekennzeichnet, dass** das Maß des Überstands des Tragarms (12) vom Förderorgan (3) nach außen, vorzugsweise eines Schwenklagers (11) des Schwenkträgers (10) vom Förderorgan (3), das Maß zwischen den Außenkonturen der Halteelemente (H) der Gruppe, vorzugsweise zwischen den Außenkonturen der in die Halteelemente (H) geladenen Behälter (B), und die konvexe Krümmung im Bogen (26), vorzugsweise der Krümmungsradius (r) derart aufeinander abgestimmt sind, dass im Bogen (26) jeweils benachbarte Behälter (B) in zwei benachbarten Halteelementen (H) zweier benachbarter Tragarme (12) in der einreihigen Position einen Zwischenabstand bilden, vorzugsweise gleich dem Abstand in einem Halteelement (H).

14. Behälter-Behandlungsmaschine nach Anspruch 2, **dadurch gekennzeichnet, dass** der Radius der Behandlungsstrecke (2, 2') im Karussell (1, 1') größer ist als der Radius (r) des Bogens (26).

15. Verfahren zum Beladen und Entladen einer Behälter-Behandlungsmaschine (M), die wenigstens ein eine mehrreihige Behandlungsstrecke (2, 2') mit mitlaufenden Behandlungsorganen (24, 25) definierendes Karussell (1, 1') und zumindest Zu- und Abführsysteme (Z, A) für Behälter (B), insbesondere Flaschen (22), umfasst, wobei an einem Förderorgan (3) angebrachte Behälter-Halteelement-Gruppen in einer Ladezone (L) mit Behältern beladen und in einer Entladezone (E) entladen und die Behälter (B) die Behandlungsstrecke (2, 2') in mehreren zueinander parallelen Reihen durchlaufen, **dadurch gekennzeichnet, dass** die Halteelement-Gruppen aus nur einer einzigen Reihe (D) des Zuführsystems (Z) beladen und wieder in eine einzige Reihe (D) des Abführsystems (A) entladen und zum Laden und Entladen relativ zum Förderorgan (3) zeitweise zwischen einreihigen und mehrreihigen Positionen eingestellt werden.

16. Verfahren nach Anspruch 15, **dadurch gekennzeichnet, dass** in Förderrichtung benachbarte Halteelement-Gruppen durch eine Führung des Förderorgans (3) entlang eines Bogens (26) an der Bogenaußenseite zeitweise in Förderrichtung zwangssepariert werden und jede Halteelement-Gruppe in die einreihige Position bei zumindest im Wesentlichen maximaler Zwangsseparation zwischen den Halteelement-Gruppen umgestellt wird.

17. Verfahren nach Anspruch 15, **dadurch gekennzeichnet, dass** mit den einreihig beladenen und einreihig entladenen Halteelement-Gruppen zumindest während deren Förderung entlang der Behandlungsstrecke (2, 2') zumindest zwei parallele Reihen (D1, D2) gebildet werden.

18. Verfahren nach Anspruch 15, **dadurch gekennzeichnet, dass** jede Halteelement-Gruppe vor Erreichen der und bis durch die Lade- und Entladezone (L, E) aus der mehrreihigen Position in die einreihige Position und vor Erreichen der Behandlungsstrecke (2, 2') in die mehrreihige Position umgestellt wird.

## Claims

1. Container treatment machine (M), particularly with a filler (F) and/or rinser (R) for bottles (22), with at least one carousel (1, 1') defining a multiple row treatment section (2, 2'), with treatment members (24, 25) running with the carousel in several rows, with container holding element groups arranged on sections of a live conveyor member (3), the holding elements (H) of which are positioned next to each other at least within the treatment section (2, 2') crosswise to the conveying direction, and with supplying and removing systems (Z, A), which convey to and from the treatment section (2, 2') for loading and unloading the holding elements (H) into loading and unloading areas (L, E), **characterised in that** the supplying and removing systems (Z, A) to a multiple row treatment section (2, 2') are made with a single row (D), that each holding element group can be changed between a single row position, in which the holding elements (H) are at least more or less parallel to the conveying direction, and the multiple row position crosswise to the conveying direction, and that a holding element position changing device (U) is provided in the area of the loading and unloading areas (L, E).

2. Container treatment machine according to claim 1, **characterised in that** the conveyor member (3) in the loading and unloading areas (L, E) forms a convex bend (26) to the supplying and removing systems (Z, A), that the holding elements (H) of the group on a section of the conveyor member (3) are arranged on a carrier arm (12), which juts out from the section to the outside of the convex bend (26) at least in the loading and unloading area (L, E), and that the holding elements (H) of the group on the carrier arm (12) are housed so that they can swivel between the single row position and the multiple row position.

3. Container treatment machine according to claim 2, **characterised in that** the holding element position changing device (U) comprises a stationary restraint in the conveying direction behind the loading area and in front of the unloading area (L, E) and a live energy storing device or a servo drive for changing the holding elements (H) from the single row position into the multiple row position.

4. Container treatment machine according to claim 1, **characterised in that** the supplying and removing systems (Z, A) have single row star-shaped supplying and removing devices (14, 18) or single row linear conveyors (14', 18') and the loading and unloading areas (L, E) are provided at star-shaped deflection devices (13, 17), which can change between single row and multiple row, for the conveyor member (3).

5. Container treatment machine according to claim 4, **characterised in that** the holding element position changing device (U) is arranged on a star-shaped deflection device (13, 17).

6. Container treatment machine according to claim 1, **characterised in that** the machine (M) has at least two multiple row treatment sections (2, 2') conveying to each other, preferably a rinser (R) and a filler (F) connected downstream of the rinser (R).

7. Container treatment machine according to claim 6, **characterised in that** a multiple row transfer section (T) is provided between the treatment sections (2, 2'), preferably with two further star-shaped deflection devices (15, 16).

8. Container treatment machine according to claim 1, **characterised in that** an overhead turning section (W) is provided for the holding elements (H) arranged in the multiple row position in the conveying direction before and after a treatment section (2), preferably a rinser (R).

9. Container treatment machine according to claim 2, **characterised in that** the conveyor member (3) is an endless conveyor link chain and that the carrier arms (12) are mounted on chain links (4) or on joints (5) between two chain links (4).

10. Container treatment machine according to claim 1, **characterised in that** the holding elements (H) are grippers (6) and that each gripper (6) has a jaw (7), which faces outwards from the conveyor link (3) in the single row position and inwards or against the conveying direction in the multiple row position.

11. Container treatment machine according to claim 2, **characterised in that** the holding elements (H) of a group are arranged on a common swivelling carrier (10), which is supported so that it can swivel on the carrier arm (12), and preferably is loaded by spring force in the direction towards the multiple row position defined by a stop (20) on the carrier arm (12).

12. Container treatment machine according to at least one of the previous claims, **characterised in that** the multiple rows are at least two rows (D1, D2), which are more or less parallel to each other.

13. Container treatment machine according to claim 2, **characterised in that** the measurement of the projection of the carrier arm (12) outwards from the conveyor member (3), preferably a swivel bearing (11) of the swivelling carrier (10) from the conveyor member (3), the measurement between the external contours of the holding elements (H) of the group, preferably between the external contours of the container (B) loaded into the holding elements (H), and the convex curve in the bend (26), preferably the curve radius (R) are adapted to each other in such a way that in the bend (26) adjacent containers (B) in two adjacent holding elements (H) of two adjacent carrier arms (12) have a distance between them in the single row position, preferably the same as the distance in a holding element (H).

14. Container treatment machine according to claim 2, **characterised in that** the radius of the treatment section (2, 2') in the carousel (1, 1') is greater than the radius (r) of the bend (26).

15. Method for loading and unloading a container treatment machine (M), which has at least one carousel (1, 1') defining a multiple row treatment section (2, 2') with live treatment members (24, 25) and at least supplying and removing systems (Z, A) for containers (B), particularly bottles (22), in which container holding element groups arranged on a conveyor member (3) load containers in a loading area (L) and unload in an unloading area (E) and the containers (B) run through the treatment section (2, 2') in several rows parallel to each other, **characterised in that** the holding element groups load from only a single row (D) of the supplying system (Z) and then unload into a single row (D) of the removing system (A) and are adjusted between a single row and a multiple row position at times for loading and unloading in relation to the conveyor member (3).

16. Method according to claim 15, **characterised in that** adjacent holding element groups in the conveying direction are forcibly separated at times by a guide of the conveyor member (3) along a bend (26) on the outside of the bend in the conveying direction and each holding group is changed into the single row position, when there is at least substantially maximum forcible separation between the holding element groups.

17. Method according to claim 15, **characterised in that** at least two parallel rows (D1, D2) are formed with the single row loaded and single row unloaded holding element groups at least during conveying along the treatment section (2, 2').

18. Method according to claim 15, **characterised in that** each holding element group is changed from the multiple row position into the single row position before reaching and going through the loading and unloading area (L, E) and into the multiple row position before reaching the treatment section (2, 2').

## Revendications

1. Machine de traitement de récipients (M), notamment pour un poste de remplissage (F) et/ou un poste de rinçage (R) de bouteilles (22) comprenant :
au moins un tambour (1, 1') définissant un chemin de traitement à plusieurs rangées (2, 2'), des organes de traitement (24, 25) à plusieurs rangées fonctionnant avec le tambour,
des groupes d'éléments de fixation de récipients installés sur des sections d'un organe de transfert (3) fonctionnant en synchronisme, dont les éléments de fixation (H) sont positionnés de façon juxtaposée transversalement à la direction de transfert, au moins dans le chemin de traitement (2, 2') et qui assurent le transfert vers des systèmes d'alimentation et des systèmes d'évacuation (Z, A), pour charger et décharger les éléments de fixation (H) dans des zones de chargement et de déchargement (L, E) pour les fournir et les extraire des chemins de traitement (2, 2'),
**caractérisée en ce que**
les systèmes d'alimentation et d'évacuation (Z, A) vers le chemin de traitement (2, 2') à rangées multiples sont réalisés avec une seule rangée (D),
chaque groupe d'éléments de fixation est prévu entre une position à une rangée dans laquelle les éléments de fixation (H) sont au moins sensiblement parallèles à la direction de transfert, et une position à rangées multiples, cette position étant située en travers de la direction de transfert, et
dans la région des zones de chargement et de déchargement (L, E), il est prévu un dispositif de commutation de position des éléments de fixation.

2. Machine de traitement de récipients selon la revendication 1,
**caractérisée en ce que**
l'organe de transfert (3) forme un arc convexe (26) par rapport aux systèmes d'alimentation et d'évacuation (Z, A) dans la zone de chargement et dans la zone de déchargement (L, E),
des éléments de fixation (H) d'un groupe sont installés sur un bras de support (12) d'une section de l'organe de transfert (3) qui dépasse au moins dans la zone de chargement et de déchargement (L, E) par rapport à la section vers le côté extérieur de l'arc convexe (26), et
les éléments de fixation (H) du groupe des bras de support (12) sont montés pivotants entre la position à une seule rangée et la position à rangées multiples.

3. Machine de traitement de récipients selon la revendication 2,
**caractérisée en ce que**
le dispositif de commutation de position (U) des éléments de fixation comprend un guidage forcé fixe dans la direction de transfert en aval de la zone de chargement (L) et en amont de la zone de déchargement (E) ainsi qu'un accumulateur de force fonctionnant en même temps ou un servomoteur pour commuter les éléments de fixation (H) de la position à une rangée dans la position à rangées multiples.

4. Machine de traitement de récipients selon la revendication 1,
**caractérisée en ce que**
les systèmes d'alimentation et d'évacuation (Z, A) comportent des étoiles d'alimentation et d'évacuation (14, 18) à une rangée ou un convoyeur linéaire (14', 18') à une rangée et les zones de chargement et de déchargement (L, E) sont prévues entre des étoiles commutables (13, 17) pour l'organe de transfert (3), ces étoiles commutant entre une rangée et plusieurs rangées.

5. Machine de traitement de récipients selon la revendication 1,
**caractérisée en ce que**
le dispositif de commutation de position (U) des éléments de fixation est prévu respectivement au niveau d'une étoile de commutation (13, 17).

6. Machine de traitement de récipients selon la revendication 1,
**caractérisée en ce que**
la machine (M) se compose d'au moins deux chemins de traitement (2, 2') à rangées multiples, qui s'alimentent l'une l'autre, de préférence un poste de rinçage (R) et un poste de remplissage (F) en aval du poste de rinçage.

7. Machine de traitement de récipients selon la revendication 6,
**caractérisée par**
un chemin de transfert (T) à rangées multiples de préférence avec deux autres étoiles de commutation (15, 16) entre les chemins de traitement (2, 2').

8. Machine de traitement de récipients selon la revendication 1,
**caractérisée en ce que**
chaque fois un chemin de retournement (W) pour les éléments de fixation (H) en position à rangées multiples est prévu dans le sens de transfert en amont et en aval d'un chemin de traitement (2) de préférence d'un poste de rinçage (R).

9. Machine de traitement de récipients selon la revendication 2,
**caractérisée en ce que**
l'organe de transfert (3) est un convoyeur sans fin à chaîne à maillons, et
les bras de support (12) sont montés sur les maillons (4) ou sur les articulations (5) entre chaque fois deux maillons (4) de la chaîne.

10. Machine de traitement de récipients selon la revendication 1,
**caractérisée en ce que**
les éléments de fixation (H) sont des pinces (6), et
chaque pince (6) comporte une ouverture (7) tournée vers l'extérieur dans la position à une rangée de l'organe de transfert (3) et tournée dans la direction de transfert ou dans la direction opposée dans le cas de la position à rangées multiples.

11. Machine de traitement de récipients selon la revendication 2,
**caractérisée en ce que**
les éléments de fixation (H) d'un groupe sont montés sur un support pivotant (10) commun lui-même monté pivotant sur le bras de support (12) et de préférence sollicité par la force d'un ressort en direction de la position à rangées multiples définie par une butée (20) sur le bras de support (12).

12. Machine de traitement de récipients selon les revendications précédentes,
**caractérisée en ce que**
les rangées multiples sont constituées par au moins deux rangées (D1, D2) pratiquement parallèles.

13. Machine de traitement de récipients selon la revendication 2,
**caractérisée en ce que**
la mesure du dépassement du bras de support (12) par rapport à l'organe de transfert (3), vers l'extérieur de préférence d'un palier de pivotement (11) du support pivotant (10) par rapport à l'organe de transfert (3), la mesure entre les contours extérieurs des éléments de fixation (H) des groupes de préférence entre les contours extérieurs des récipients (B) chargés dans les éléments de fixation (H) et la courbure convexe dans l'arc (26) de préférence le rayon de courbure (r) sont définis les uns par rapport aux autres pour que dans l'arc (26), des récipients (B) respectivement voisins, forment dans deux éléments de fixation voisins (H) de deux bras de support voisins (12), dans la position d'une rangée unique, un intervalle de préférence égal à l'intervalle dans un élément de fixation (H).

14. Machine de traitement de récipients selon la revendication 2,
**caractérisée en ce que**
le rayon du chemin de traitement (2, 2') dans le tambour (1, 1') est plus grand que le rayon (r) de l'arc (26).

15. Procédé de chargement et de déchargement d'une machine de traitement de récipients (M) comportant au moins un tambour (1, 1') définissant au moins un chemin de traitement (2, 2') à rangées multiples avec des organes de traitement (24, 25) tournant en synchronisme et au moins des systèmes d'alimentation et d'évacuation (Z, A) des récipients (B) notamment des bouteilles (22),
des groupes d'éléments de fixation de récipients portés par un organe de transfert (3) se chargeant de récipients dans une zone de chargement (L) et se déchargeant dans une zone de déchargement (E), les récipient (B) traversant le chemin de traitement (2, 2') suivant plusieurs rangées parallèles,
**caractérisée en ce que**
les groupes d'éléments de fixation se chargent à partir d'une rangée unique (D) du système d'alimentation (Z) et se déchargent de nouveau dans une rangée unique (D) du système d'évacuation (A), et pour charger et décharger ils sont réglés par rapport à l'organe de transfert (3) de temps en temps entre des positions à une rangée et une position à rangées multiples.

16. Procédé selon la revendication 15,
**caractérisé en ce que**
les groupes d'éléments de fixation voisins dans la direction de transfert sont séparés de manière forcée par un moyen de guidage de l'organe de transfert (3) le long d'un arc (26) sur le côté extérieur de l'arc, de temps en temps dans la direction de transfert, et chaque groupe d'éléments de fixation est commuté dans la position d'une rangée simple par au moins une séparation forcée pratiquement maximale entre les groupes d'éléments de fixation.

17. Procédé selon la revendication 15,
**caractérisé en ce que**
par le chargement en rangées simples et le déchargement en rangées simples, les groupes d'éléments de fixation forment au moins pendant leur transfert sur le chemin de traitement (2, 2'), au moins deux rangées parallèles (D1, D2).

18. Procédé selon la revendication 15,
**caractérisé en ce que**
chaque groupe d'éléments de fixation est commuté de sa position à rangées multiples dans sa position à rangées simples avant d'atteindre la zone de chargement et la zone de déchargement (L, E) et jusqu'à la traversée de ces zones, et il est commuté dans sa position à rangées multiples avant d'atteindre le chemin de traitement (2, 2').
